# EUROPEAN PATENT APPLICATION

(11) **EP 2 667 114 A1**
(43) Date of publication of application: **27.11.2013**
(21) Application number: 11852411.5
(22) Date of filing: 29.12.2011
(51) Int. Cl.: F24J 2/48, F24J 2/07, B05D 3/02

(54) **METHOD FOR IN SITU COATING A TOWER SOLAR RECEIVER**

(30) Priority: 30.12.2010 ES 201001652 P
(71) Applicant: Abengoa Solar New Technologies, S.A., 41018 Sevilla (ES)
(72) Inventor: CLAVIJO RIVERA, Erika Patricia, 41014 Sevilla (ES); MARTINEZ SANZ, Noelia, 41014 Sevilla (ES); FERNÁNDEZ QUERO, Valerio, 41014 Sevilla (ES); BARRAGÁN JIMENEZ, José, 41014 Sevilla (ES)
(74) Representative: Garcia-Cabrerizo y del Santo, Pedro Maria
(86) International application number: PCT/ES2011/000381
(87) International publication number: WO 2012/089869

(57) **Abstract**

The invention relates to a method for *in situ* coating a tower solar receiver in order to protect the surface of the receiver from corrosion and to increase absorptivity of same, which is carried out in several steps: surface preparation, application of the coating, curing, optional vitrification, and controlled cooling. The surface preparation is done by zones depending on the size of the receiver, a methodology that enables an intercalated application of the coating in order to minimize the risk of corrosion. The curing stage is carried out by supplying steam to the inside of the receiver tubes, and temperature requirements above the operating limits of the boiler are adjusted with the solar field as support system. Vitrification is done using saturated steam traveling through the receiver tubes and concentrating solar radiation on the surface of the receiver from the solar field.

## Description

### Technical sector of the invention

This invention belongs to the technical sector that encompasses the procedures to apply liquids or other fluid materials to surfaces, with the prior treatment thereof. More specifically, it relates to an application method of absorbing coatings to tower solar receivers. The method includes the surface preparation, application of the coating, curing, and *in situ* vitrification of the receiver.

### Background of the invention

In tower solar receiver systems, a field of heliostats or mobile mirrors that are oriented according to the position of the sun, reflect solar radiation in order to concentrate the same on a receiver that is located at the top of a tower. The receiver is in charge of transferring the heat that is received to a working fluid such as water, molten salts, etc., with the purpose of generating steam that will expand in a turbine coupled to a generator for the production of electricity. These receivers have a special coating that boosts the absorption of the solar radiation concentrated by the heliostats. The tower serves as support for the receiver, which must be located at a certain height above the level of the heliostats with the purpose of improving the cosine effect, which is caused by the angle formed by the incident ray along the perpendicular to the heliostat and reduces the surface of effective reflection of the mirror.

There is an extensive commercial offer within the market of coatings to be potentially used in tower solar receivers; however, very few have been developed specifically for said application, and therefore, tested on said solar components.

Therefore, the documentation that can be found about experiences in coating application methodology, in combination with the use of solar technologies, is still scarce. The main references are presented below:
Patent DE2734604 A1 (Process for coating for solar panels) discloses the composition of a coating applicable to solar technology that increases the absorption of heat by the solar component. Also, patent FR2399289 A1 shows a lacquer with black pigments that can be deposited in solar collectors and which films can reach thicknesses ranging between 5 and 30 microns.
Patent US005562953A shows that, by means of the addition of a non-saturated amine to conventional coatings, the curing rate of the coatings exposed to UV radiation or solar light can be improved. The curing proposed therein is carried out with non-concentrated solar radiation or with UV radiation.
Patent WO 2009/146161 A1 presents a method for coating a solar collector, wherein the curing is carried out with concentrated solar radiation.

The coating with the most experience in tower solar receivers is Pyromark® 2500; however, said product has presented durability issues when exposed to the operating conditions of the receiver. Other products to be potentially used in solar technologies are those recommended for boilers, exchangers, the aeronautical industry, turbines, and other similar sectors, where the surfaces of the materials of the equipment are constantly exposed to high temperatures.

The only way to guarantee the durability of the coating, regardless of product type, is by means of the use of surface preparation, application, and curing techniques especially developed to be used in solar technologies. Due to the foregoing, we have developed a procedure that allows obtaining a premium quality coating with an improved behavior with respect to the conditions of the process. This procedure allows guaranteeing the durability of the deposited film, and therefore, the protection against corrosion and the increase in the absorptivity of the surface.

Normally, high temperature coatings also require high temperature curing, due to which, after applying the layers, increasing the temperature of the surface is necessary. This process is carried out in ovens appropriate for that purpose. In the case of solar receivers, their size and the complexity of their installation makes the renewal of the absorbing coating and the curing thereof difficult, due to the need to dismount and displace the receiver from the top of the tower to ovens which sizes may be adjusted to the size of the receiver.

This way, this invention proposes a methodology to apply coating to tower solar receivers by using solar technology for the curing that allows carrying out the entire process *in situ,* that is to say, at the solar plant with the receiver installed at the top of the tower, avoiding the need to dismount the solar component for its coating at a workshop and subsequent transfer to the plant, and therefore, the deterioration of the coating during said processes until its installation.

### Description of the invention

Tower solar receivers receive concentrated solar radiation by means of a heliostat field. These receivers, through which a heated working fluid circulates, require the application of an absorbing coating on their surfaces. This coating, in addition to increasing the absorptivity of the surface, also protects the receiver against environmental factors and corrosion.

The absorbing coatings currently used in the receivers are silicon-based coatings, which provide them with good resistance to high temperatures, having black pigments that grant the absorbing property.

Due to the fact that the protection of a surface with a coating depends on the surface preparation and on the success of the deposition process (thickness of the deposited film, continuity thereof, application method), in addition to the characteristics of the product itself, the methodology to be used in all the steps of the application process needs to be specified.

The solution to the low durability problem presented by the products used to coat tower solar receivers is found in the methodology used in its application. The procedure proposed in this invention allows overcoming the main problems, such as the appearance of cracks in the coating that penetrate to the surface of the tubes, leaving it exposed and susceptible to the start of corrosion processes, and the flaking of the coating in certain zones, which decreases the efficiency of the plant in a considerable manner given that the heat absorption of the receiver is reduced.

The procedure proposed in this invention to coat tower solar receivers consists of the following steps, all of which are carried out *in situ* on the solar receiver:
i) Surface preparation: blasting of the surface to be coated with an abrasive material, such as fine sand, to obtain a favorable anchoring profile for the coating.
ii) Application of the coating: deposition of the necessary layers by means of airless spraying.
iii) Curing: increasing the temperature of the coated surface to eliminate volatile compounds, and therefore, the formation of the solid film of coating.
iv) Vitrification (optional): after the curing step and prior to the controlled cooling of the receiver, an optional vitrification step may be carried out, which consists in increasing the temperature of the coated surface to temperatures higher than the curing temperature and near the operating temperature of the receiver.
v) Controlled cooling of the receiver until it reaches room temperature.

The steps corresponding to the preparation of the material and the application of the coating are carried out by zone in an alternating or intercalated manner, that is to say, the blasting of an zone of the receiver is carried out and then the coating is applied to that same zone, the receiver being divided into a different number of zones depending on its size.

The purpose of this alternation, instead of carrying out the surface treatment in the entire surface and then applying the coating to the entire surface, as is the case of the procedures in the state of the art, is to prevent the oxidation of the receiver between steps, due to the large size of the receiver.

The curing is carried out by supplying steam to the inside of the receiver tubes. This steam can come from an auxiliary boiler, from a prior solar heating step, etc. In order to obtain the correct curing of the coating and to avoid *a posteriori* cracking problems, it is indispensable to guarantee a constant and continuous input of heat to the receiver until reaching the temperature recommended by the coating manufacturer for this operation. To achieve the foregoing, the curing step also integrates the solar field within the process as an auxiliary support system, which would be used in the case the failure of the steam input to the inside of the receiver tubes.

Carrying out the curing by circulating steam through the inside of the receiver tubes offers a fundamental advantage with respect to the systems carrying out the curing from the outside, given that, in this manner, the curing of the coating is produced from the innermost layers (those in contact with the receiver) towards the outermost layers. This way, the evaporation and expulsion of the volatile components of the internal layers takes place prior to the curing of the external layers, which means said volatile components are released into the atmosphere without any problems. If the curing is carried out from the outside, the first layers to harden are the external ones, which means that the volatile components of the internal layers cannot be released into the atmosphere when they start to evaporate due to the heat input, and remain inside the coating as occluded bubbles, increasing the porosity of said coating. These occluded bubbles, which cause imperfections and inhomogeneities in the coating, lead to defects such as perforations, craters, or cracks, which cause the subsequent oxidation or reduction of the absorption in the receiver, as explained above.

In terms of the vitrification of the coating (optional step, depending on the type of coating applied), is carried out by means of increasing the temperature of the coated surface that has already been cured. In this step, the coating is exposed to conditions that are similar to the operating conditions of the receiver, increasing its temperature to more than 400 °C. This temperature increase is obtained by means of the circulation of steam through the inside of the tubes, plus the application of concentrated solar radiation on the receiver coming from the heliostat field.

The step of controlled cooling of the receiver until reaching room temperature is fundamental in the coating process to avoid the immediate formation of cracks, which are produced if the newly applied coating is submitted to sudden temperature changes. In order to achieve said progressive cooling, the heliostats are first defocused such that they cease to concentrate heat on the surface of the receiver. Then, a series of recirculation pumps of the receiver are connected, which cause the circulation of a fluid at a controlled temperature through the inside of the receiver tubes until reaching 100 °C. Then, they are turned off and the air is left to cool completely.

The problems found in the state of the art are solved with the foregoing steps by means of a more efficient procedure that is carried out *in situ,* that is to say, with the receiver installed at the top of the tower.

### Brief description of the drawings

With the purpose of facilitating the comprehension of the invention, several figures representing the following in an illustrative rather than limitative manner, have been attached:

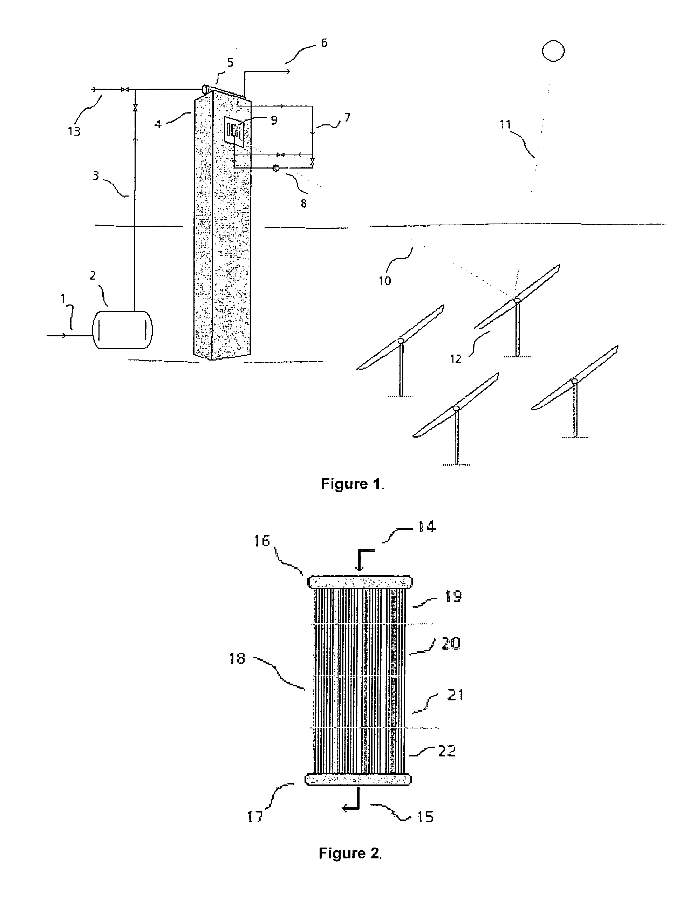

- In figure 1, a general scheme of the solar plant with central-tower technology.
- In figure 2, a general scheme of a panel of a tower solar receiver.

In said figures, the different references appearing therein have the following meanings:
(1) Power supply of the auxiliary boiler
(2) Auxiliary boiler
(3) Auxiliary steam current supplying the reboiler
(4) Tower
(5) Reboiler
(6) Overheated steam coming from the reboiler to supply the turbine
(7) Saturated steam current supplying the receiver
(8) Auxiliary pump
(9) Receiver
(10) Incident radiation on the receiver, reflected by heliostat
(11) Incident radiation on the heliostat
(12) Heliostat
(13) Reboiler supply current
(14) Saturated steam supply current to the receiver
(15) Output saturated steam current of the receiver
(16) Inlet manifolds
(17) Outlet manifolds
(18) Panel of the tower solar receiver
(19) Coating Zone 1 of the receiver
(20) Coating Zone 2 of the receiver
(21) Coating Zone 3 of the receiver
(22) Coating Zone 4 of the receiver

### Description of a preferred embodiment

A preferred, rather than limitative, embodiment of the proposed coating procedure for tower solar receiver, is described below:

The procedure comprises the following steps:

### a) Division of the receiver into zones

Given the size of the receiver, both the surface preparation and the application of the coating must be carried out by dividing the surface of the receiver into several zones, which, in the case of the preferred embodiment, is established as four zones (19, 20, 21, 22). Applying the coating after blasting each zone is possible with this division by intercalating both procedures in order to minimize the time between the blasting and coating of the entire receiver.

### b) Surface preparation of the first zone

The surface of the receiver (9), located at the top of a tower (4), is treated to increase the anchoring of the coating to said surface. Starting with zone 1, the prior coating is eliminated, as applicable, as well as the impurities that could affect the quality of the coating to be deposited (oxides and other products of corrosion). This surface preparation guarantees that the surface is free from grease, dust, oils, dirt, prior coatings, oxides, products of corrosion, and any other type of deposited foreign matter.

The process used to prepare the surface is blasting, by means of the use of a pressurized abrasive (sand) to eliminate any matter embedded in the zone to be treated. Then, any residue of the material used in the blasting process must be eliminated with the application of pressurized air on the treated surface.

Given the location of the receiver at the top of a tower, having a scaffold allowing the operatives executing the work to come near the receiver, such that they can be located in front of the surface to be treated, is necessary for the blasting and for the application of the coating. The scaffold also helps the worker to be at a constant distance form the receiver, thus favoring the homogeneity of the processes in the entire surface of the receiver.

The blasting process, which uses fine silica sand, allows obtaining an optimal anchoring profile for the coating. Said profile is verified after completing the surface preparation process.

After being blasted, surfaces become susceptible to the initiation of corrosion processes, due to which the time elapsed between the blasting and the application of the coating cannot exceed 8 hours.

After the surface preparation is completed, a visual inspection is carried out to verify there is no old coating (as applicable) or remains of products of corrosion embedded that are detectable in plain sight.

### c) Application of the coating to the first zone

After completing the blasting of zone 1 (19), the number of layers of coating recommended by the manufacturer is applied, using airless spraying equipment and respecting the drying time required between each layer, also defined by the manufacturer.

Lastly, the homogeneity of the layers and the absence of bubbles and cracks are verified.

Airless spraying is used for the application of the coating. With this method, the coating is propelled through a hole at a very high pressure. It presents the advantages of being able to avoid the use of a solvent to decrease the viscosity of the product, or, as applicable, to use it in very small quantities; on the other hand, it results in thicker films than with other methods, greater coverage, and an enhanced application in hard-to-access zones.

After applying the coating, and once the air-drying time recommended by the manufacturer has elapsed, the thickness of the obtained film, which must be within the range specified by the coating manufacturer, is verified. Measurements at several points of the zone are taken by using a dry layer thickness measurer, obtaining an average value.

### d) Repetition of processes b) and c) for the other zones of the receiver.

The same process is carried out with zone 2 (20), 3 (21), and 4 (22).

### e) Curing of the coating by means of the circulation of steam through the inside of the receiver.

The curing of the receiver is carried out by increasing the temperature of the surface of the receiver tubes until reaching the curing temperature (according to the specifications of the coating), and by maintaining said conditions during the period of time recommended by the coating manufacturer.

In the case of the tower solar receiver, the curing system consists of the following: i) temperature increase system for the receiver with the passage of the working fluid; and ii) support system to guarantee a constant supply of thermal energy to the surface of the receiver.
i) Temperature increase system for the receiver with the passage of the working fluid: the temperature of the external surface of the tubes is increased until reaching the curing temperature, by causing the passage of saturated steam coming from the auxiliary boiler (2), or from any other source, through the inside of said tubes until reaching the correct temperature. Said temperature is reached in 2 hours and must be maintained during the period of time stipulated by the manufacturer.
ii) Support system for the curing process: in order to ensure a constant input of heat after the start of the curing process, without the receiver experiencing temperature drops, the heliostat field (12) shall be kept operative and in stand-by, such that it can be used according to the temperature needs at the surface of the receiver. If the curing temperature required is higher than the one that can be reached at the receiver due to the operating limits of the boiler (approximately 320°C), or if the input of steam is interrupted, the heliostats must be focused in a controlled manner until reaching said curing temperature. A vitrification step can be carried out after the curing.

### f) Vitrification of the coating (optional step)

Superheated steam tower solar receivers operate at maximum steam temperature of approximately 540°C. Given the way in which the concentration of solar radiation on the surface of receiver is carried out, maintaining a constant temperature during the operation is impossible. In this case, some coating manufacturers recommend carrying out the vitrification operation to increase the protection of the coating against thermal shock.

The vitrification operation of the coating applied to the tower solar receiver is carried out by passing saturated steam, coming from the reboiler (5), through the inside of the tubes, and by focusing the heliostats (12) of the solar fields in a controlled manner towards the receiver in a heat input ratio of 5MWt every 10 minutes, until reaching the vitrification temperature, thus achieving a temperature increase of 50 °C/h. Once the maximum radiation input point is reached, and with it, the vitrification temperature, said condition is maintained during the period of time recommended by the coating manufacturer.

The integration of the solar field to the procedure allows increasing the temperature of the surface of the receiver beyond the limits of the boiler. In addition, with this vitrification step, the coating is subject to conditions that are similar to the operating conditions in a controlled manner, thus guaranteeing that the film that is formed will withstand the operating conditions of the receiver.

### g) Controlled cooling of the receiver

After completing the vitrification, the defocusing of the heliostats shall be also carried out at a specific defocusing ratio that will allow a reduction of 5MWt in the heat input every 10 minutes. Once the field is defocused in its entirety, and in order to avoid a sudden temperature drop, the recirculation pumps (8) of the receiver are turned on, until reaching a temperature below 100°C at the surface thereof. Once the pumps are turned off, the receiver is allowed to cool to room temperature.

This procedure is applicable and adaptable to any commercial coating requiring high temperatures for its curing and vitrification, and that is intended to be used as absorbing coating for a tower solar receiver. It may also be used at any scale, in tower receivers at a pilot scale and at a commercial scale.

One of the advantages of the proposed procedure is that is allows carrying out the entire coating process *in situ,* thus avoiding the difficult dismounting operation to apply the coating at other facilities and carrying out the curing process with a conventional procedure (the panels of the receiver are taken to large furnaces, wherein the temperature increase is made in a controlled manner). In addition, by carrying out the curing from the inside of the receiver by means of heat provided by the steam circulating inside the receiver, the layers of coating that are closest to the surface of the receiver are cured before the outermost layers of coating, thus avoiding the formation of occluded bubbles of solvent and imperfections in the innermost layers of the coating.

On the other hand, by carrying out the vitrification by means of the concentration of solar radiation from the heliostats, the coating develops surface conditions that are favorable with respect to the operating conditions, thus increasing the durability thereof.

Lastly, the methodology being used allows minimizing the risk of obtaining a partial curing with undesirable properties in the formed film, given it guarantees a constant input of heat to the receiver during the entire curing step.

## Claims

1. Method for *in situ* coating of a tower solar receiver, comprising the following steps:
a) Surface preparation of the receiver
b) Application of the coating
c) Curing of the coating by means of the circulation of steam through the inside of the receiver
d) Controlled curing of the receiver

2. Method of coating according to claim 1, **characterized in that** a delimitation of the surface of the receiver into several zones is carried out prior to the surface preparation.

3. Method of coating according to claim 2, **characterized in that** steps a) and b) are carried out by the zones into which the surface of the receiver has been delimited, said steps being intercalated to minimize the time between them.

4. Method of coating according to claim 3, **characterized in that** the application of the coating on each area of the receiver which surface has been previously treated is carried out less than eight hours after the execution of the surface treatment.

5. Method of coating according to claim 1, wherein the surface preparation is carried out by blasting the surface with a pressurized abrasive material.

6. Method of coating according to claim 1, **characterized in that** the application of the coating is carried out by airless spraying.

7. Method of coating according to claim 1, **characterized in that** after the curing step and prior to the controlled cooling step of the receiver, a vitrification step of the film of coating by means of the supply of steam through the inside of the receiver and by means of the concentration of solar radiation coming from the field of heliostats at the surface of said receiver, is carried out.

8. Method of coating according to claim 7, **characterized in that** the concentration of radiation on the receiver in the vitrification step is carried out by focusing the heliostats of the solar field towards the receiver in a controlled manner at a heat input ratio of 5MWt every 10 minutes, until reaching the vitrification temperature recommended by the coating manufacturer for this operation.

9. Method of coating according to claim 1, wherein the curing process, in addition to being carried out by means of the supply of steam through the inside of the receiver, uses the solar field as support system to maintain a constant heat input towards the receiver until reaching the temperature recommended by the coating manufacturer for this operation.

10. Method of coating according to claim 1, wherein the controlled cooling of the receiver is carried out by means of the controlled defocusing of heliostats of the solar field and wherein, after removing the heat input, the circulation of cold fluid through the receiver begins.

11. Method of coating according to claim 10, wherein the defocusing of the heliostats is such that the heat input is reduced in 5MWt every 10 minutes, and the recirculation of the cold fluid through the receiver is carried out by means of recirculation pumps until the surface temperature is below 100°C, when the pumps are disconnected and the receiver is allowed to cool to room temperature.
